# EUROPEAN PATENT APPLICATION

(11) **EP 1 518 668 A2**
(43) Date of publication of application: **30.03.2005**
(21) Application number: 04030611.0
(22) Date of filing: 13.06.2003
(51) Int. Cl.: B32B 25/10

(54) **Mat**

(30) Priority: 13.06.2002 GB 0214103; 12.03.2003 GB 0305867; 11.04.2003 GB 0308398
(62) Divisional of application: 03760076.4
(71) Applicant: MILLIKEN INDUSTRIALS LIMITED, Wigan, Lancashire WN6 8RN (GB)
(72) Inventor: Brazier, Peter Charles, Leighton Buzzard Bedfordshire, LU7 0QE (GB); Brock, Thomas Albert Patrick, Brooklands, Sale Manchester, M33 3RW (GB); Kerr, Robert, Lagrange, GA 30240 (US); Patel, Bhawan, Ladybridge, Bolton Lancashire, BL3 4TX (GB); Bojstrup, Flemming, 8543 Hornslet (DK); Morel, Patrick, 91400 Gometz La Vilie (FR)
(74) Representative: Raynor, Simon Mark

(57) **Abstract**

A mat with a textile surface (1) and an elastomer backing layer (2) that includes elastomer crumbs and a binder. The elastomer backing layer (2) includes voids between the elastomer crumbs for increased flexibility.

## Description

### Technical Field

The present invention relates to a mat having a textile surface and an elastomer backing.

In particular, but not exclusively, the invention relates to a floor mat. The invention also relates to other mats and mat-like products, including for example table mats and bar runners.

### Background to the Invention

Floor mats having a textile surface and a rubber backing are very well known and have been manufactured for many years. Typically, such mats include a tufted pile textile surface, for example of nylon, cotton, polypropylene or a mixture of such fibres, which is bonded to a rubber backing sheet. Such mats are usually made by bonding the textile surface layer to a sheet of uncured rubber in a heated press. The heat from the press vulcanises (cures) the rubber and at the same time bonds it to the textile layer. A process for manufacturing such mats is described in EP 0 367 441 A. Such mats have very good dust control characteristics, are highly effective at removing dirt and moisture from the feet of pedestrians, and have a good feel and appearance. The mats are also washable, extremely durable, highly flexible and lie flat on the floor.

Rubber backed floor mats with surfaces made of other textiles are also known. These textiles may include knitted, woven, or non-woven fabrics (such as needle felts or spun-bonded fabrics), with or without a pile or raised nap, as well as flocked surfaces. The textile surface may be bonded under pressure to a rubber backing sheet, using a process similar to that described above. Other mats and mat-like products, such as table mats and bar runners, have also been made in a similar fashion.

One disadvantage of the mats described above is that they tend to be rather expensive, owing to the relatively high cost of the rubber backing material. As a result, those mats have enjoyed only limited commercial success in certain market sectors, where a lower cost product is required. For example, in the commercial and retail or residential market sectors, rubber backed dust control mats have achieved a market penetration of only about 5% of total mat sales, the remainder of the matting sold into this market sector being either unbacked or backed with PVC or latex.

However, PVC and latex backed mats do have a number of disadvantages as compared with conventional rubber backed mats. In particular, PVC backed mats have poor flexibility, especially at low temperatures, and after being unrolled such mats often do not lie flat on the floor. They also have an inferior appearance and feel when compared with rubber backed mats, can become brittle with age, and can have poor resistance to movement when placed on top of carpet. There are also growing environmental concerns associated with the manufacture and disposal of PVC backed mats. These disadvantages have, however, been tolerated in certain market sectors, owing to the lower cost of the mats.

Recycled rubber has been used effectively at a low cost substitute for virgin rubber in certain applications. Some examples of such applications are discussed below:
EP 0135595 describes a method for manufacturing a floor covering in the form of a web, which may be used as a sports surface. The web consists of a lower textile base and an upper layer of disintegrated waste rubber and/or granules of new or scrap rubber that has been mixed with a pre-polymer as a solvent-free single-component binder, spread on a conveyor belt, compressed and subsequently cured.
DE 4212757 describes a moulded component forming an elastic layer and comprising a mixture of granulated recycled material and binders. The component has three compressed layers of uniform thickness bonded together at their interfaces. Upper and middle layers are formed by flat plates and the lower layer has hump-shaped feet separated by grooves. The individual layers are formed in different materials with different particle sizes. The component can be used as a covering, for example for floors.

A mat with a compression moulded rubber crumb backing and having a flock surface applied to the backing is available under the brand name "Royal mat". The compression moulded backing is made by mixing rubber crumb with a binder and then compressing a layer of the mixture in a mould at a high pressure while the binder bonds the crumbs together. The flocked textile surface is subsequently applied to the backing using an adhesive.

Compression moulding produces a rubber crumb backing that has a high density and low deformability. This makes the mat heavy and inflexible, with the result that it does not conform well to the shape of the floor beneath it. The mat does not therefore have the performance characteristics of a conventional rubber backed mat.

Rubber carpet underlay manufactured from lightly bonded crumb rubber is also known. The underlay is however made without any significant pressure and as a result it is not sufficiently well bonded to make it durable enough for use as a mat backing.

Notwithstanding the aforesaid applications, recycled rubber does not have the same performance characteristics as virgin rubber. In particular, it has a lower tear resistance and a higher stiffness, owing to the presence of a binder material. As a result, recycled rubber has not generally been thought suitable for use as the backing material for a mat, since it has been thought to offer no significant advantages over PVC.

It is therefore desirable to provide a mat that overcomes the performance shortcomings of PVC backed mats and compression moulded mats, and that avoids the relatively high cost associated with conventional rubber-backed mats.

### Disclosure of the Invention

According to one aspect of the present invention there is provided a mat with a textile surface and an elastomer backing that includes elastomer crumbs and a binder, characterised in that the elastomer backing includes voids between the elastomer crumbs.

Throughout this specification the term "crumb" has the normal meaning in the rubber industry of any "broken down" rubber: thus, a crumb of rubber can be any size in a range that includes powder, granules and chips. The term "powder" means crumb that will pass a 2 mm mesh or crumb with a maximum dimension of 2 mm as the context requires. "Granule" means crumb that will pass a 6 mm mesh or crumb with a maximum dimension of 6mm, as the context requires. Granules may include some powder but are generally larger than powder and have a weight average size that is near to the maximum of the size specification for the granule. "Chips" means crumbs that are larger than granules.

It should be noted that any batch of rubber crumb normally contains a proportion of crumbs smaller than the nominal crumb size. Thus, for example, we found that crumb made using a granulator with a 1.5mm screen (i.e. having holes of diameter 1.5mm) had a distribution of crumb sizes, measured by using standard "Endecott" test sieves (ISO3310-1:2200, BE410-1:2000, ASTM E11:95), comprising by weight 72.82% in the range 1.0-2.0mm, 17.45% of 0.71-1.0mm, 6.90% of 0.5-0.71mm, 2.65% of 0.25-0.5mm and 0.18% of 0-0.25mm. Therefore, in the present specification, where we refer to 1.5mm crumb, we mean crumb made using a granulator with a 1.5mm screen.

We have found, surprisingly, that it is possible to make a mat having superior performance characteristics with a backing made of elastomer crumb and a binder. In particular, we have found that by carefully controlling the pressure in the production process, we can produce a mat with voids between the elastomer crumbs in the backing, which meets or exceeds the performance of mats with a PVC backing layer and existing compression moulded mats. The mat can be produced in a single process, using relatively inexpensive materials (for example, recycled rubber from old mats), and therefore provides a high performance but low cost alternative to conventional rubber-backed mats, compression moulded mats and PVC mats.

The presence of voids between the crumbs increases the flexibility of the backing, thereby compensating for the stiffening effect of the binder and providing a deformability that is comparable to that of a conventional rubber backing. The mat is more flexible than both compression moulded rubber backed mats and PVC backed mats, in the latter case particularly at low temperatures. The tear strength of the backing is however much greater than that of granulated rubber carpet underlay, and is adequate for most mat backings, even in unsupported border regions of the mat. The backing is also extremely stable when placed on top of carpet, probably because the pile fibres of the carpet are gripped in the numerous small gaps between the crumbs of the backing. It is also relatively light and it has good fire resistance compared to a conventional rubber backed mat.

The elastomer is preferably rubber, and more preferably nitrile rubber. This backing material provides better performance than PVC at a cost that may be less than PVC and without the environmental concerns associated with PVC. Nitrile rubber is a term used to describe a compounded rubber mixture of which the main polymeric content is an acrylonitrile butadiene copolymer. It may also contain fillers such as carbon black, a curing system, plasticisers and other ancillary components. This backing material provides better performance than PVC at a cost that may be less than PVC and without the environmental concerns associated with PVC.

Advantageously, the elastomer crumb backing exhibits a deformability from at least 14% as measured by the test herein defined. Preferably the deformability is 14 to 50%, more preferably 14 to 25%.

Advantageously, the elastomer backing has a bulk density in the range 45 to 70%, preferably 55 to 70%, of the elastomer from which the crumbs are made.

Advantageously, the backing has a density of less than 1g/cm³. The backing preferably has a density in the range 0.5 to 0.9g/cm³, more preferably 0.7 to 0.9g/cm³.

Advantageously, the backing exhibits a tear resistance strength of at least 0.8N/mm². Preferably the tear resistance strength is about 1.5N/mm² or higher.

The mat backing preferably has a thickness of a least 1 mm. The crumb size preferably may be within the range of about 0.8mm to about 6mm, with crumb sizes less than about 5 mm diameter being generally preferred. More specifically, crumb sizes within the range of about 2mm to about 4mm, and preferably sizes of about 3mm or less, have been found to be particularly advantageous for use. The choice of crumb size to be used, and the relative percentage of powder used, if any, depends somewhat upon the desired performance aspects of the mat and the desired manufacturing cost. Because use of small crumb (say, for example, powder less than about 1mm) tends to require increased use of binder and thereby increased manufacturing cost, limiting use of crumb to small granules and large powder (e.g., crumb within the range of about 1mm to about 4mm, or, preferably, predominantly crumb within the range of about 2mm to about 3mm) may be preferred if minimizing manufacturing cost is important.

The use of powdered crumb increases the strength of the resulting backing, and generates a smoother appearance, but increases the cost of production, both in the need for additional grinding and in the need for the use of additional binder. Accordingly, the amount of powdered crumb can be adjusted to suit the needs of the product; typically, including powder of at least 10% by weight has been used. The elastomer crumb is preferably at least partially comprised of crumbed vulcanised rubber. The rubber is preferably nitrile rubber. The elastomer crumb may include a combination of crumb sizes in addition to the powdered elastomer crumb.

The binder may be comprised of any of several different materials. For example, the binder may be a polyurethane MDI binder. Preferably it is selected from the group consisting of 4,4-methylene di-p-phenylene isocyanate (MDI) polyurethane one- and two-component adhesives. Advantageously the binder is a solvent-free, one component (moisture curing) polyurethane adhesive. Such binder may typically be present at a level of from 4 to 12%. Alternatively the binder may be a hot melt binder and is desirably present at a level of from 3 to 10%. When powdered elastomer crumb is included in the backing and the binder is a one component polyurethane adhesive, the binder level preferably lies in the range 9 to 20%, as may be determined by experimentation. Exceptionally, binder levels of up to 25% may be employed.

The backing may include powdered or liquid additives selected from the group consisting of: anti- microbial additives, anti-flammability additives, pigments, such as iron oxide, and anti-static additives, such as carbon fibres. This provides added functionality to the mat.

Advantageously, a crumb rubber border extending beyond the periphery of the textile surface is provided on at least two opposite edges of the mat. The crumb rubber border may be provided around the entire periphery of the mat.

Advantageously, the textile surface comprises a tufted pile textile, including tufts of yarn tufted into a tufting substrate. Alternatively, the textile surface comprises a knitted, woven or non-woven textile, or a flock surface.

An edging strip may be bonded to the elastomer backing adjacent at least one edge thereof. Advantageously, the textile surface element partially overlaps and is bonded to the edging strip.

The mat may be a floor mat, a table mat, a bar runner or any other mat or mat-like product.

Often, commercial or retail floor mats are backed with PVC. The advantage of this mat backed with elastomer crumb is that it is similar in cost of production to PVC and has superior appearance and feel to PVC. Furthermore, it has much better low temperature flexibility than PVC, which means that the elastomer crumb backed mat lies better on the floor than a PVC backed mat. The mat is also less liable to become brittle with age than a PVC backed mat. In tests, we found that crumb rubber backed mats remained sufficiently flexible to unroll and lie flat immediately after being removed from storage at minus 16°C. Mats according to the invention also unroll more easily than PVC mats at higher temperatures and tend to give off less of a distinctive odour of rubber than conventional vulcanised rubber mats. The ability to roll up is very important for commercial mats as they are often over 6m long and can be as long as 25m. It is also important for retail mats as they are frequently sold in rolled up form to enable the larger sizes to be carried home. The lie flatness or amount of rippling of the mat edges after both mats had been rolled up was visibly superior in the mat according to the invention.

The invention will now be further described by way of example only and with reference to the drawings, which are briefly described as follows:
Figure 1 is a cross-sectional side elevation of a mat;
Figure 2 is a top plan view of the mat;
Figure 3 is an enlarged partial bottom view of the mat;
Figure 4 is a side elevation of a press for manufacturing the mat;
Figures 5A to 5D are photographs showing in cross-section the structure of various rubber crumb backing layers;
Figure 6 is an exploded side view of a laid-up mat assembly, prior to pressing, according to a second embodiment of the invention, and
Figure 7 is an enlarged partial cross-sectional side elevation of a mat according to the second embodiment of the invention.

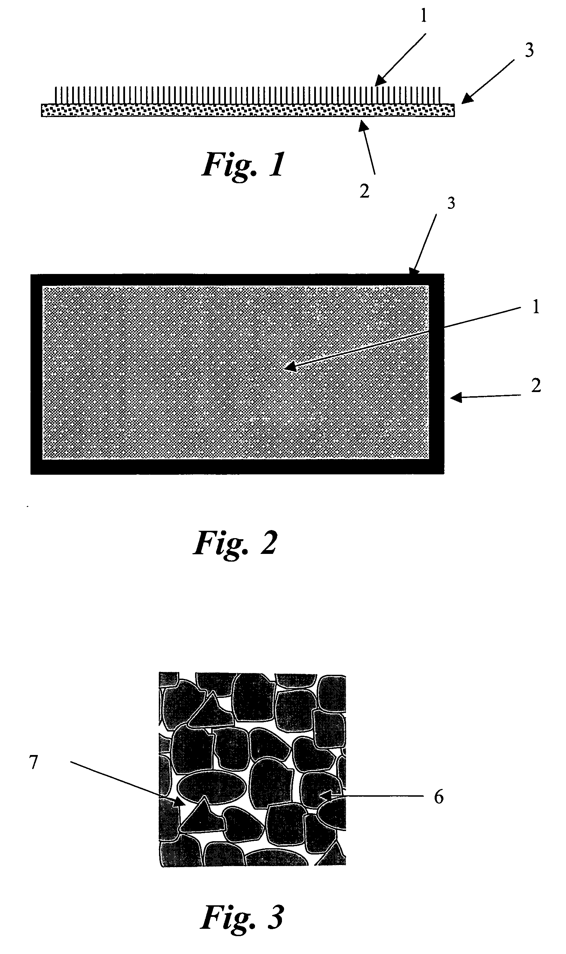

With reference to figures 1 and 2, a mat is shown with a textile surface 1 bonded to a nitrile rubber crumb backing 2. In this case, the textile surface is shown as a tufted pile textile. It should be understood however that other textiles may also be used including, for example, knitted, woven and non-woven fabrics, as well as flocked surfaces.

The textile surface 1 includes a tufted pile, which is tufted onto a substrate (or primary backing), for example of woven or non-woven polyester or polypropylene. The tufted pile can be cut, looped or both, and typically consists of cut pile. Suitable textile materials include polypropylene, nylon, cotton, blends thereof and any other fibres or yarns that can be tufted into a tufting substrate to form a pile surface. The yarn may be solution dyed or the mats may be printed during or after manufacture.

The textile surface 1 is slightly smaller than the backing, leaving a rubber crumb border 3 that extends around the periphery of the mat. Alternatively, the border strips may be omitted entirely or two border strips may be provided on opposite sides of the mat, with no borders at the ends of the mat. This latter construction is preferred for rolls or matting. The width of the mat and the other dimensions may be any of those conventionally used for commercial or retail mats or any other suitable dimensions. For mats with a low backing thickness, it is advantageous for the textile surface to cover the whole upper surface of the backing. For aesthetic reasons, such mats are often provided with what is termed an "optical border", which is a dark printed area around the periphery of the mat.

Figure 3 shows the rubber crumb backing 2 in more detail. It generally comprises a series of rubber crumbs 6 bonded together with a binder (not shown), which bonds each crumb to the adjacent crumbs. The binder also bonds the backing 2 to the textile surface 1. A plurality of voids 7 exist between the rubber crumbs, some of which may be partially or fully filled with the binder. Owing to the presence of the voids, the bulk density of the backing layer is less than the density of the solid rubber material of which the crumbs are composed, and is typically about 45%-70% of the solid rubber density.

Generally, any batch of granules will include a distribution of granule sizes, the average granule size being significantly less than the maximum that will pass through the mesh. For example, we have found when using a 4mm mesh that the majority of the granules lie in the range 1 to 3mm (i.e. they will pass through a 3mm mesh but not a 1mm mesh). Further, it should be noted that the granules tend to be irregular in shape and often have a thickness that is considerably less than the nominal granule size. Thus, with the compaction that occurs during the pressing process, we have found that a backing layer can be made using granules having a nominal size larger than the thickness of the backing layer.

The crumb is preferably nitrile rubber, and is preferably rubber from recycled industrial mats. The rental industrial segment is an ideal source of raw material for the crumb because it ensures that low bleed, low staining nitrile rubber crumb is used as the starting point for the production of the mats of the invention. The crumb may include some flock from the textile surface of the original mat, perhaps in bonding relationship to the crumb. The flock content should preferably be as low as possible, most preferably less than 10% by weight.

The crumb size may range from about 0.01 to 8 mm. Generally, the size is selected to be as large as possible for the use and properties required. However, crumb larger than granules (i.e. larger than about 6mm) may be regarded as excessively granular, and crumb that is smaller than about 0.8mm may be regarded as excessively costly (both in terms of supply and increased binder requirements). Generally, it has been found that crumb within the range of about 2mm to about 4mm is preferred. Specifically, crumb that passes a 4mm aperture screen (i.e. crumb predominantly of about 3mm or less) has been found to be particularly useful for floor mats. In accordance with the teachings herein, powder (i.e. crumb less than 2mm in size) may be used as desired. Crumb size can be chosen to give different amounts of resilience in the mat. We have found that larger crumbs provide greater resilience.

Crumb may be mixed with powder of the same material or a different material to provide a greater tear resistance. We have found that the powder increases the tensile strength for a given binder level. The use of other additives in powdered or liquid form may provide the same or different advantages. Suitable additives include, but are not limited to, anti-microbial materials, anti-flammability additives, odorants, colorants or pigments such as iron oxide powder, anti-static additives such as carbon fibres, fillers and other generally known additives.

The binder may be either a heat setting or thermoplastic type. Depending on the process utilized to manufacture the backing, the binder can be in liquid or powder form. Preferably, the binder is selected from one of the following types: polyurethane reactive hotmelts, copolyester or copolyamide reactive and thermoplastic hotmelts, 4,4-methylene di-p-phenylene isocyanate (MDI) polyurethane one- and two-component adhesives.

It is important that the binder has good adhesive properties to ensure that the crumb is well bound, and that sufficient free binder is provided to be capable of forming a physical or chemical bond to the textile surface. The binder should also exhibit sufficient cohesive strength to give the backing sufficient strength. When a tufted pile textile is used, the binder should be one that cures or sets at a sufficiently low temperature and pressure that pile crush is substantially avoided.

The binder may contain any of the known cross linkers or curing accelerators to suit the process and the desired properties of the mat being manufactured and the rubber being used.

The binder performs the dual function of holding together the crumb to form a backing and bonding the backing to the textile surface of the mat. To perform both functions adequately we have found that binder levels should be in the range 2 to 12% by weight of the crumbs when chips or granules are used. Use of less than 2% binder gives a very poor tensile strength in the backing. Use of greater than 12% gives a stiff backing and causes a skin to form. When rubber crumb powder is added to the backing, the amount of binder needed for optimal properties is greater due to the higher surface area of the rubber crumb powder on a weight for weight basis. For powders, especially finer rubber crumb powders of size less than 0.5mm, the quantity of binder should lie in the range 9 to 20%, depending upon the size and quantity of the powder added. Because the powder addition increases the tensile strength, inclusion of a little powder can improve the strength of the backing without increasing the binder content excessively.

Generally, there is an inverse relationship between the binder content and size of the rubber crumb, and between the binder content and pressure applied to the rubber crumb while forming the backing layer. Therefore, as the crumb size and the pressure increase, the binder content decreases. The binder content also depends on other factors, such as the type of binder, the rubber material used and the type of fabric, and can be determined by routine experimentation.

For example, the binder may be a liquid polyurethane MDI binder, in which case it is preferably present at a level of from 4 to 12% if the backing consists primarily of chips or granules. The binder may contain further additives that are in liquid form and are compatible with the binder, such as colorants, plasticisers and perfumes. The binder may also contain other additives, such as those listed as crumb additives, provided that they are suitable for addition in a liquid medium.

The binder may alternatively be a thermoplastic or thermosetting hot melt powder, in which case it is preferably present at a level from 3 to 10% if the backing consists primarily of chips or granules. A powdered binder may also contain other additives such as those listed as crumb additives, provided that they are suitable for addition in a powder medium.

The preferred ranges for binder content may thus be summarized as follows:

Backing of chips/granules: binder content in range 2 to 12%, preferably 4 to 12% with an MDI binder or 3 to 10% with a hot melt binder.

Backing with ≥ 10% powder: binder content in range 9 to 20%, preferably 14% or more.

Exceptionally, a binder content of up to 25% may be employed, even though this may lead to the formation of a skin.

Examples of mat products according to the invention are given in Table 1.

**Table 1 -**

| Example Products | | | | |
|---|---|---|---|---|
| Property | Floor mat - tufted polypropylene fabric on rubber powder backing | Floor mat - tufted nylon on rubber granule backing with printed optical borders | Bar runner - knitted polyester fabric on rubber powder backing | Poster mat - woven polyester on rubber granule backing |
| Textile Type | Polypropylene | Nylon 6 | Polyester | Polyester |
| Weight | 500 gm⁻² | 600 gm⁻² | 237 gm⁻² | 200 gm⁻² |
| Method | Tufted | Tufted | Knitted | Woven |
| Tufting substrate | 80 gm⁻² Polyback | 140 gm⁻² Colback | n/a | n/a |
| Backing Material (screen size) | 0.8mm powder | 3mm granule | 0.5mm powder | 4mm granule |
| Thickness | 1.5 mm | 4.0 mm | 1.0 mm | 1.5 mm |
| Weight | 2000 gm⁻² | 3000 gm⁻² | 1333 gm⁻² | 2000 gm⁻² |
| Total Weight | 2580 gm⁻² | 3740 gm⁻² | 1570 gm⁻² | 2200 gm⁻² |
| Borders | 15 mm | None | None | None |
| gm⁻² is grams per square meter | | | | |

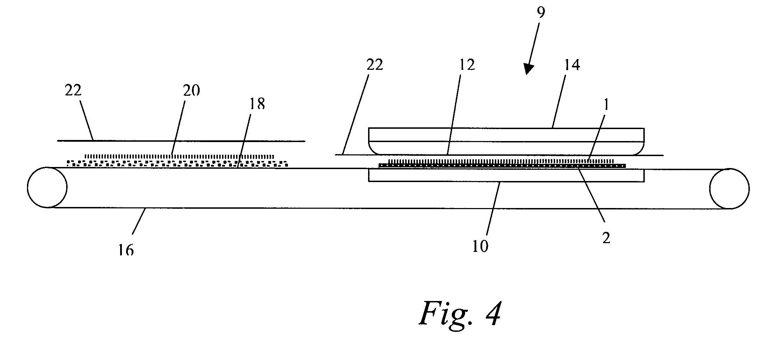

A process for making the mat of figures 1-3 will now be described with reference to figure 4, which is a schematic exploded cross-section of a mat as laid up in a press during manufacture. The press 9 includes a heated metal platen 10, above which there is an inflatable diaphragm 12, mounted on a frame 14. The frame 14 may be either fixed or moveable, depending on whether the press has a fixed or variable opening aperture. A conveyor belt 16 made, for example, of PTFE-coated woven glass fabric extends around and beyond the heated platen 10, allowing laid up mats to be transferred in and out of the press 9.

The lay up consists of the following items placed in order on the conveyor belt 16. First, a mixture of rubber crumb, binder and any other required additives is made up and spread evenly onto the conveyor belt 16, forming a loose crumb layer 18 having a thickness, a width and a length that are slightly greater than the required dimensions of the finished backing layer 2. The binder may, for example, be a hot melt powder, in which case the amount of binder typically varies between 3% and 10% by weight, depending on the size of the crumbs and the amount and type of any optional additives.

A die cut fabric layer 20, for example of tufted pile textile on a suitable substrate, is placed on top of the loose crumb layer 18; the length and width of the fabric layer preferably should be slightly less than the equivalent dimensions of the loose crumb layer if a rubber border is required. The laid up mat is then covered with a release sheet 22 of PTFE-coated woven glass fabric, to prevent the rubber backing sheet 2 sticking to the diaphragm 12.

The press is heated to a temperature of about 125°C. The conveyor belt 16 is advanced to position the laid up mat between the platen 10 and the diaphragm 12, and the diaphragm 12 is then inflated, for example, to a pressure of about 4 pounds per square inch, to press the laid up mat against the heated platen 10, typically for a cycle time of 10 minutes.

The heat from the platen 10 activates the binder, thereby binding the rubber crumbs together and forming the backing layer 2. At the same time, the pressure from the diaphragm 12 slightly compresses the backing layer 2 to ensure a good bond between the granules, and presses the fabric layer 1 against the backing layer 2, allowing the binder to bond the two layers together.

After completion of the pressing process, the diaphragm 12 is deflated and the rubber backed mat is removed from the press 9 and allowed to cool. The release sheet 22 is then removed and, if necessary, the edges of the rubber backing layer 2 are trimmed, for example using any suitable knife or other cutting means, for example, a guillotine.

We have found that by using the process described above, we can control the flexibility and strength of the backing by adjusting the pressure applied to the backing in the press. By increasing the pressure the tensile strength of the backing can be increased, and by reducing the pressure the flexibility of the backing can be increased. The desired performance characteristics of the backing can thus be achieved by careful control of the backing pressure.

Also, when tufted pile textiles are used, the problem of pile crush can be substantially avoided. This is because the press operates at a much lower pressure (typically, 4 psig) and temperature (about 125°C) than is usual in a conventional mat press, which typically operates at a pressure of 20 to 40 psig or higher and at temperatures above 160°C. It may be possible to operate the press at even lower temperature (for example down to about 50°C) by the use of suitable binders. The lower pressure and temperature are possible because the rubber crumb is already vulcanised and the heat and pressure only have to be sufficient to activate the binder and press the granules together so that they bond to one another and to the fabric layer. In a conventional mat making process, a much higher pressure and temperature is required to soften and cure the vulcanised rubber backing, and to press the fabric layer into the backing.

The mats provide a higher level of comfort and are less dense than compression moulded mats, which have high-density backings. The inventive mat is suited to the retail and commercial segments.

### Example

A batch of 0.8 to 3mm rubber crumb was made up by granulating vulcanised nitrile rubber in a granulator with a 3mm screen and then passing the granules over a 0.8mm screen to remove fines smaller than 0.8mm. The granules were then mixed with 8% MDI binder. The mixture was divided up and sample rubber mat backings were made by spreading the crumb mixture evenly with a thickness of 8 mm and then pressing the mixture using an air bag press at various pressures to produce a series of samples. The pressure ranged from no pressure in the air bag through to 45 psig. All the rubber backing samples so formed were set or pressed at 125°C for 10 minutes. A 25mm square section was then cut from each sample and its thickness and weight were measured. From this, the density of the sample and the bulk density of the rubber crumb layer was determined, expressed as a percentage of the density of the material from which the crumb was made. The data are given in Table 2.

**Table 2 -**

| Density Test Data | | | | | | | |
|---|---|---|---|---|---|---|---|
| Sample | Pressure psig | Thickness mm | Thickness % | Weight g | Volume cm³ | Density g/cm³ | Bulk density % |
| A | 0 | 8.1 | 100 | 2.8 | 5.06 | 0.55 | 45 |
| B | 2 | 6.2 | 78 | 2.8 | 3.87 | 0.72 | 59 |
| C | 4 | 5.4 | 68 | 2.6 | 3.37 | 0.77 | 63 |
| D | 8 | 5.4 | 68 | 2.9 | 3.37 | 0.86 | 70 |
| E | 16 | 5.0 | 63 | 3.2 | 3.12 | 1.02 | 84 |
| F | 32 | 4.3 | 54 | 2.8 | 2.68 | 1.04 | 85 |
| G | 45 | 3.9 | 49 | 2.7 | 2.43 | 1.11 | 91 |
| Royal | | 7.3 | | 5.0 | 4.56 | 1.10 | 90 |
| Rubber | | | | | | 1.22 | 100 |

The sample referred to as "Royal" is the backing layer of the prior art "Royal" mat referred to previously, which is formed by compression moulding rubber crumb in a fixed platen press to form a very dense backing. The sample referred to as "Rubber" is a solid vulcanised rubber backing of a conventional floor mat.

It can be seen from Table 2 that the density increases as the pressure applied increases. The maximum density achieved was 1.11 g/cm³, equivalent to a bulk density that is 91% of the density of the solid rubber backing. Theoretically, if the backing sample were 100% compressed to remove all voids the density would be about 1.22 g/cm³ to match that of the solid rubber backing of the conventional vulcanised mat referred to as "Rubber". From the table, it can be seen that the density of the compression moulded product (the "Royal" mat) is about the same as the density we obtained using a 45 psi pressure.

Table 2 also gives a general view of the backing thickness reduction from around 8mm before to around 4-6mm after pressing, representing a reduction of up to 50% of its original thickness.

The samples were then tested to determine their deformability. This test was done with a thickness gauge with a 10mm diameter foot. Weight was applied to the measuring plunger of the thickness gauge. First the new backing thickness was measured with 60g weight and then the thickness was re-measured with a 800g weight. The deformability is the percentage fall in the thickness at 60g loading when the loading pressure was increased to 800g. The results are shown in Table 3.

**Table 3 -**

| Deformability Test Data | | | | |
|---|---|---|---|---|
| Sample | Pressure | 60 g | 800 g | Deformability % |
| A | 0 | 7.65 | 4.0 | 47.7 |
| B | 2 | 5.70 | 4.3 | 24.6 |
| C | 4 | 5.10 | 4.2 | 17.6 |
| D | 8 | 5.30 | 4.55 | 14.2 |
| E | 16 | 4.80 | 4.3 | 10.4 |
| F | 32 | 4.15 | 3.75 | 9.6 |
| G | 45 | 3.70 | 3.5 | 5.4 |
| Royal | | 7.45 | 7.05 | 5.4 |
| Rubber | | 6.10 | 5.6 | 8.2 |

From Table 2 it can be seen that there is a correlation between formation pressure and density, and from Table 3 it can be seen that there is a correlation between pressure (density) and deformability. This correlation may be expressed as follows: the higher the formation pressure, the higher the density, and the higher the density, the lower the deformability.

In Tables 2, 3 and 4, the sample referred to as "Rubber" is a commercially available vulcanised rubber backed industrial mat. The vulcanised rubber is softer and therefore more deformable than the high pressure crumb backings because of the presence of binder in the latter. The binder material is relatively hard, compared with vulcanised rubber, and this reduces the flexibility of the backing.

In the mat made by compression moulding (the "Royal" mat), the bulk density of the mat backing was about 90% of the density of the material from which the crumb was made and is usually in the range of 80-95%. The backing is harder than the material from which the crumb was made because of the presence of the binder.

On the other hand, using the process according to the invention, the bulk density of the backing can be varied to lie within 45-90% of the density of the material from which the crumb was made. Preferably, the bulk density of the backing is made to lie within 45-70%, and more preferably within 55-70%, of the density of the crumb material. This provides a backing with a deformability of about 14-50%, more preferably 14-25%, which is better than that of a compression moulded mat and comparable to that of a conventional rubber backed mat. The invention also offers the advantage of a lighter weight mat that is more easily washed and dried and easier to carry and transport, whilst still being a rubber backed mat. This also has the advantage that the product density can be varied by a minor process change to enable production flexibility. Additives could also be included in the crumb and binder mix to further control or change the density if required.

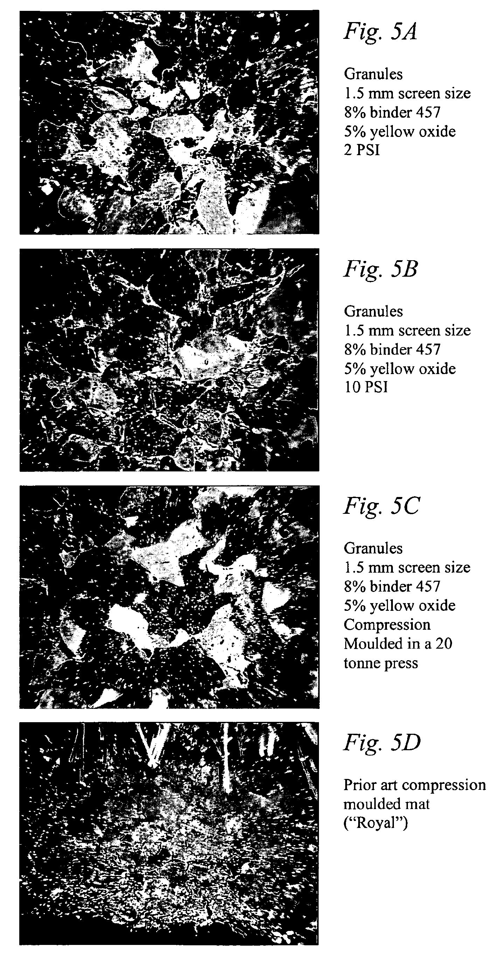

The effect of different formation pressures on the structure of the backing layer is shown photographically in figures 5A to 5D. Figure 5A shows a cross-section at a magnification of about 10x through a backing layer made up from 1.5mm rubber granules together with 8% MDI binder and 5% yellow oxide (which was added to binder to improve its visibility), and pressed at a pressure of 2 PSI. Some of the granules were coloured blue and others were coloured black, to allow the boundaries between the granules to be seen more easily (the blue granules appear a lighter shade of grey). The individual granules can be easily identified and are substantially undeformed, having straight edges and sharp corners. The granules are packed together as a loose conglomeration giving the backing a sponge-like appearance. Many voids can be seen between the granules, those voids being generally only partially filled with binder.

Figure 5B shows a similar backing, produced at a pressure of 10 PSI. The backing has a tighter, more compact structure and some slight deformation of the granules can be seen. This increases the area of contact between adjacent granules and increases the tear strength of the backing. Nevertheless, many voids are still visible between the granules, which are only partially filled with binder.

Figure 5C shows a backing made using the same mixture of granules and binder, but using a compression moulding process in a 20 tonne press. In this case, severe deformation of the granules has taken place and the boundaries between adjacent granules are almost unidentifiable, except where the granules have different colours. The backing layer is dense and virtually solid, with hardly any voids between the granules.

Figure 5D shows a cross-section through a conventional compression moulded mat (the prior art "Royal" mat). As with the backing layer shown in Figure 5C, the boundaries between adjacent granules are almost unidentifiable and the backing layer is dense and solid, with hardly any voids (except where the backing layer has fractured).

### Tear Strength Test

To test the strength of the granulated rubber backing, a batch of samples was made up using different formation pressures, ranging from no pressure in the air bag through to 8 psig. All the rubber backing samples so formed were set or pressed at 125°C for 10 minutes. Six test pieces were then cut from each sample and the tear strength of each test piece was measured, with three measurements being made in each of two orthogonal directions. The results are shown in Table 4.

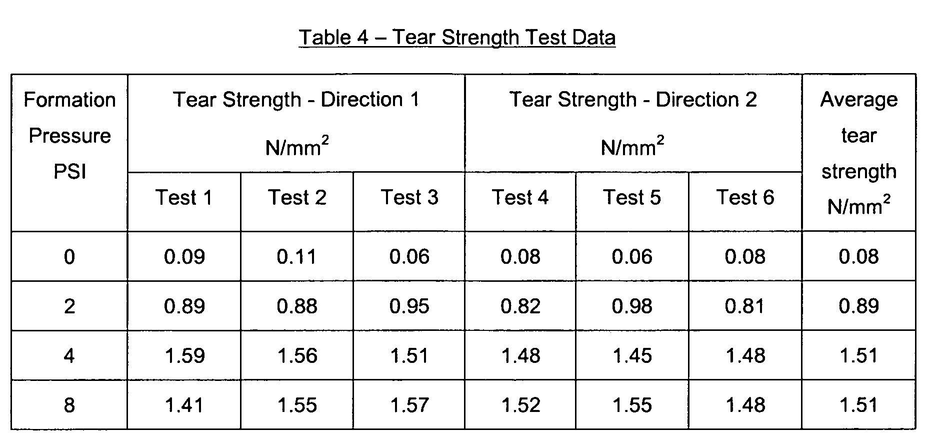

Table 4 shows that there is a correlation between formation pressure and tear strength, the strength increasing rapidly up to a formation pressure of about 4 PSI, but with no significant additional increase in strength at higher formation pressures. We have found that a tear strength of about 0.8N/mm² or higher is quite adequate for many mat applications, even though this is considerably less than the tear strength of a conventional solid rubber mat backing.

### Pile Crush Test

For this test, we made a number of mat samples, each including a tufted pile surface and a rubber crumb backing made using the same pressing temperature, time and pressure values as set out in Table 2. The extent of pile crush and the commercial acceptable of the different mat samples were then assessed subjectively. We found that for pressures of about 8psig and lower, pile crush was relatively minor and the product was commercially acceptable. However, at pressures above about 8psig, significant pile crush occurred and the product was considered commercially unacceptable without subsequently being laundered or processed in some other way to raise the pile. The preferred tufted pile mats are therefore those manufactured at a pressure of about 8psig or less, which have backings with a bulk density in the range 45-70% of the density of the solid rubber material from which the rubber crumb is derived. The best mats were those manufactured at pressures of 2-8psig, which have a bulk density in the range of about 55-70%.

### Low Temperature Recovery Test.

For this test a 300 mm x 200 mm sample of each product to be tested was conditioned at a room temperature of 22°C for 2 hours and then rolled lengthwise around a 40mm diameter tube and secured with a cable tie. The samples were then placed in a freezer and kept at a temperature of -16°C for 24 hours. The samples were removed from the freezer, the cable tie was cut and the samples were then left at 22°C for 10 minutes to relax on a flat, wood surface. Measurements were then made of the height, if any, of the ends of the mat samples above the flat surface due to the curl of the sample. Repeat measurements were made at 20 minutes and 60 minutes following removal from the freezer.

Table 5 shows the results of the above test when comparing: a conventionally backed nitrile rubber mat (A), a commercially available mat backed with PVC (B), a prior art rubber crumb backed mat formed by compression moulding in a fixed platen press to form a very dense backing (the "Royal" mat), and a mat according to the invention backed with granulated nitrile rubber crumb (D).

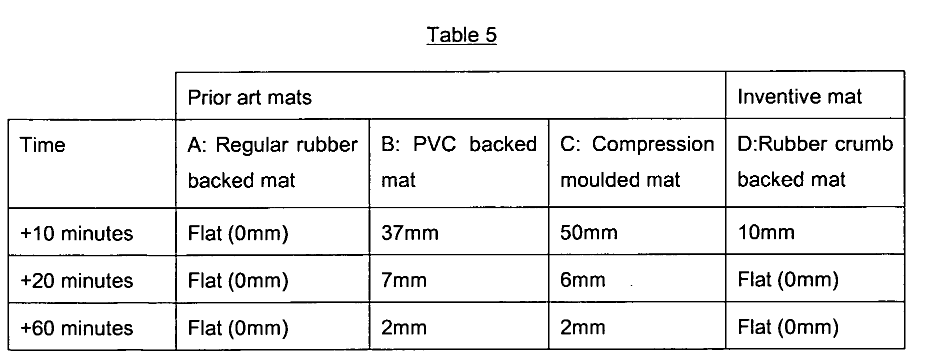

The mat according to the invention outperforms both the PVC backed mat and the compression moulded rubber crumb mat and it is not significantly different in performance from a high specification conventional rubber backed mat.

### Sand Retention Test.

For this test two equal size samples of a mat (0.05781 m²) were cut out. Each sample was weighed. They were then fixed to the inside of a tetrapod chamber. A tetrapod is a known piece of testing equipment used to measure wear of carpeting and the like. 1000 g of dry sand with a particle size distribution as shown in Table 6 was added along with five golf balls to provide agitation.

**Table 6**

| Particle size mm | Weight % |
|---|---|
| 0.00 - 0.25 | 7.0 |
| 0.25 - 0.50 | 71.0 |
| 0.50 - 0.71 | 15.7 |
| 0.71 - 1.00 | 3.5 |
| 1.00 - 2.00 | 1.7 |
| 2.00 - 2.80 | 0.16 |
| 2.80 - 4.00 | 0.02 |
| 4.00 - 6.70 | 0 |
| 6.70 and above | 0 |

The chamber was then sealed to prevent either the golf balls or the sand leaking out during the test and it was set revolving for 1000 revolutions. On completion of the test, each sample was removed and the weight increase of the sample recorded. The amount of sand retained in each sample was then calculated and expressed as the amount of dry sand retained in g/m².

Two mats with identical tufted pile construction were subjected to this test. The first mat was a tufted nylon cut pile conventional rubber backed mat, which had been fabricated in an air bag press at 165°C and 30 psi. The mat was not washed prior to the test. The second mat was a tufted nylon cut pile mat with a rubber crumb backing, which had also been fabricated in an air bag press but at a lower temperature and pressure. The sand retention results were as follows:
Sample of prior art conventional rubber backed mat A: weight increase = 723 g/m²
Sample of inventive crumb rubber backed mat B: weight increase = 2655 g/m²

Production of a conventional rubber backed mat significantly flattens the pile on the mat. The lower temperature and pressure possible when using the same type of press (with a pressurised air bag and a heated platen) to produce a rubber crumb-backed, textile pile-faced mat according to the invention results in a mat that does not suffer significantly from pile crush. This gives a mat having, immediately after manufacture, good dust control properties without being laundered. This good dust control performance is exemplified by a sand retention value in excess of 2000 g/m² for the typical nylon tufted pile used in this test. The sand retention performance for a mat according to the invention is far superior to the sand retention performance of the conventional rubber-backed tufted nylon cut pile mat, prior to washing. The uncrushed pile also exhibits better "feel" by way of a more luxurious texture.

The mats according to the invention exhibit superior fire resistance to those made from conventional nitrile rubber backing of the same thickness. When tested according to BS4790, mats made from powder nitrile rubber crumb and granule nitrile rubber crumb showed significantly higher resistance to ignition when compared to a mat made from conventional nitrile rubber backing. This is recorded in Table 7.

**Table 7**

| | Regular mat with solid rubber backing | Mat with crumb granule backing |
|---|---|---|
| Time to extinguish (s) | 170 | 50 |
| Radius of effects top (mm) | 50 | 25 |
| Radius of effects lower (mm) | 50 | 25 |

This can be further improved by the addition of more binder and/or anti-flammability additives to the backing and is especially useful when used in conjunction with a low flammability textile surface. Such a low flammability textile surface may, for example, be one that is predominantly a woollen construction.

When compared with PVC backed mats, the mats of the invention that have 4mm or larger crumb rubber in the backing have better resistance to movement on carpets. On average, these mats according to the invention display significantly improved resistance to movement on carpets compared with PVC backed mats.

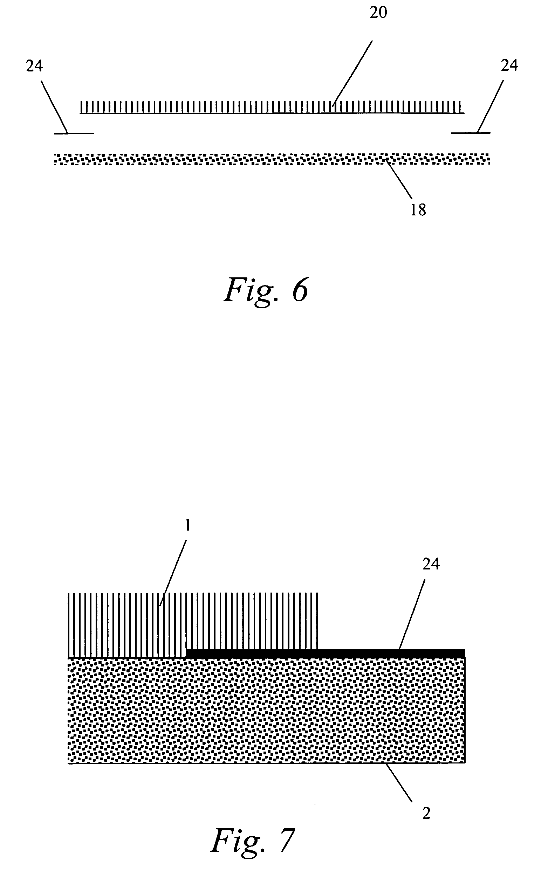

A modified mat and a method of manufacturing the modified mat will now be described with reference to figures 6 and 7. Figure 6 is an exploded side view of a laid-up mat assembly, prior to pressing, which includes a backing layer 18 comprising a mixture of rubber crumb and a binder, and a layer of fabric 20 that will form the textile layer 1 of the mat. An edging strip 24 is located adjacent each edge of the backing layer 18, between the backing layer and the fabric layer 20. The fabric layer overlaps the edging strip 24 by about 1-2cm. The edging strip 24 may be made for example of unvulcanised rubber, and may have a thickness of typically 0.35-0.45mm and a width of 2-5cm.

Figure 7 is an enlarged cross-sectional side elevation of the modified mat, showing an edge portion of the mat after completion of the pressing operation. The rubber crumb/binder mixture has been consolidated to form a backing layer 2 and the fabric layer has been bonded to the backing layer to form the textile layer 1 of the mat. The edging strip 24 is bonded to the upper face of the rubber crumb backing layer 2 and is partially overlapped by and bonded to the textile layer 1.

The edging strip 24 hides the rubber crumb backing layer 2 so that the border portion of the mat has the appearance of a conventional rubber backed mat with a solid rubber backing. This may be desirable in certain circumstances for aesthetic reasons. It also prevents dust and dirt from collecting in the small voids between the crumbs in the upper face of the rubber border to provide a cleaner appearance. In addition, the edging strip increases the tear strength of the mat border. This in turn allows a larger crumb size to be used, which reduces costs and provides increased stability on carpeted surfaces.

Edging strips 24 may be provided on just the two longitudinal side edges of the mat (particularly in the case of continuous matting), or on all four edges of the mat. The strips 24 may be bonded to the backing layer 2 and the textile layer 1 by vulcanisation during pressing, or by using a glue or a thermoplastic adhesive. The strips 24 may be made of other materials, including for example thermoplastic materials. The strips may also be pre-applied to the fabric layer, prior to pressing, either by glue or vulcanisation. After pressing, any portion of the backing layer that extends beyond the edging strip and, if necessary, the outer edge of the edging strip 24 may be trimmed off to provide a flush edge.

Other mats can also be made according to the invention including, for example, floor mats such as poster mats or foam sandwich mats, table mats, drinks mats and bar runners.

## Claims

1. A mat with a textile surface and an elastomer backing that includes elastomer crumbs and a binder; **characterised in that** the mat is a table mat or bar runner and the elastomer backing includes voids between the elastomer crumbs.

2. A mat according to claim 01 wherein the elastomer crumb is crumbed vulcanised rubber.

3. A mat according to claim 2 wherein the rubber is nitrile rubber.

4. A mat according to any preceding claim wherein the elastomer backing has a bulk density less than the solid density of the elastomer crumb material.

5. A mat according to claim 4, **characterised in that** the elastomer backing has a bulk density in the range 45 to 70%, preferably 55 to 70%, of the solid density of the elastomer crumb material.

6. A mat according to any preceding claim, **characterised in that** the backing has a density of less than 1g /cm³.

7. A mat according to claim 6, **characterised in that** the backing has a density in the range 0.5 to 0.9g /cm³, preferably 0.7 to 0.9g /cm³.

8. A mat according to any preceding claim, **characterised in that** the elastomer backing exhibits a deformability, as measured by the test herein defined, of at least 14%, preferably 14 to 50%, more preferably 14 to 25%.

9. A mat according to any preceding claim, **characterised in that** the elastomer backing exhibits a tear resistance strength of at least 0.8 N/mm².

10. A mat according to any preceding claim in which the backing has a thickness of at least 1 mm.

11. A mat according to any preceding claim in which the crumb size is less than 5 mm diameter and is preferably substantially in the range 2 to 4 mm.

12. A mat according to any preceding claim in which the elastomer crumb backing includes at least 10% by weight powdered elastomer crumb.

13. A mat according to any preceding claim in which the binder is present at a level of from 2 to 20%.

14. A mat according to claim 13, in which the elastomer crumb backing includes less than 1% by weight powdered elastomer crumb and the binder is present at a level of from 2 to 12%.

15. A mat according to claim 13, wherein the elastomer crumb backing includes at least 10% by weight powdered elastomer crumb and the binder level lies in the range 9 to 20%, preferably about 14%.

16. A mat according to any preceding claim in which the binder is a polyurethane MDI binder.

17. A mat according to claim 16 in which the binder is selected from the group consisting of 4,4-methylene di-p-phenylene isocyanate (MDI) polyurethane one- and two-component adhesives.

18. A mat according to claim 17 in which the binder is a solvent free one component polyurethane adhesive.

19. A mat according to any one of claims 01 to 15 in which the binder is a hot melt binder.

20. A mat according to any preceding claim in which the backing includes powdered additives selected from the group consisting of anti-microbial additives, anti-flammability additives, pigments, such as iron oxide, and anti-static additives, such as carbon fibres.

21. A mat according to any preceding claim, **characterised in that** a crumb rubber border extending beyond the periphery of the textile surface is provided on at least two opposite edges of the mat.

22. A mat according to claim 21 comprising a crumb rubber border extending around the entire periphery of the mat.

23. A mat according to any preceding claim, **characterised in that** the textile surface comprises a knitted, woven or non-woven textile, or a flock surface.

24. A mat according to any preceding claim, wherein an edging strip is bonded to the elastomer backing adjacent at least one edge thereof.

25. A mat according to claim 24, wherein the textile surface partially overlaps and is bonded to the edging strip.
